# FASCICULE DE BREVET EUROPEEN

(11) **EP 1 342 365 B1**
(45) Date de publication et mention de la délivrance du brevet: **23.03.2011**
(21) Numéro de dépôt: 01999107.4
(22) Date de dépôt: 15.11.2001
(51) Int. Cl.: H04N 5/00, H04N 7/14, H04N 7/16

(54) **METHODE ET APPAREIL DE VISUALISATION D'UN OBJET DANS UNE FENETRE D'UN PANORAMA**
VERFAHREN UND VORRICHTUNG ZUR ANZEIGE EINES OBJEKTES IN EINEM FENSTER INNERHALB EINES PANORAMAS
METHOD AND APPARATUS FOR DISPLAYING AN OBJECT IN A PANORAMA WINDOW

(30) Priorité: 29.11.2000 FR 0015411
(43) Date de publication de la demande: 10.09.2003
(73) Titulaire: Thomson Licensing, 92130 Issy-les-Moulineaux (FR)
(72) Inventeur: CHEVALLIER, Louis, F-35520 La Meziere (FR); TAZINE, Nour-Eddine, F-35530 Noyal sur Vilaine (FR)
(74) Mandataire: Kohrs, Martin
(86) Numéro de dépôt international: PCT/FR2001/003575
(87) Numéro de publication internationale: WO 2002/045412

(56) Documents cités:
- EP-A- 0 919 956
- WO-A-00/79797
- NN: "Four Photographic VR technologies" INTERNET, 7 décembre 1998 (1998-12-07), XP002150185
- SHENCHANG ERIC CHEN: "QUICKTIME VR - AN IMAGE-BASED APPROACH TO VIRTUAL ENVIRONMENT NAVIGATION" COMPUTER GRAPHICS PROCEEDINGS. LOS ANGELES, AUG. 6 - 11, 1995, COMPUTER GRAPHICS PROCEEDINGS (SIGGRAPH), NEW YORK, IEEE, US, 6 août 1995 (1995-08-06), pages 29-38, XP000546213 ISBN: 0-89791-701-4 cité dans la demande

## Description

La présente invention concerne une méthode de visualisation d'un objet dans une fenêtre d'un panorama.

On entend par panorama un procédé de rendu d'une scène réelle ou virtuelle, ce procédé permettant d'afficher partiellement la scène sur un écran. Il est ainsi prévu de pouvoir faire défiler le panorama de sorte que toute la scène soit accessible à un observateur qui est situé au centre de cette scène ; l'observateur fait varier son angle de vue mais pas son point de vue.

On assiste maintenant de manière courante à la représentation de scènes panoramiques en trois dimensions, et à titre d'exemple, on citera le logiciel "Quicktime VR" qui est une marque déposée de la société Apple. A ce sujet, on pourra se référer à l'article "Quicktime VR - An Image Based Approach to Virtual Environment Navigation", S.E. Chen, SIG'GRAPH95.

Un observateur situé au centre d'une telle scène peut pivoter sur lui-même pour faire varier son angle de vue dans une plage de 0° à 360°. La scène peut donc être représentée par un cylindre qui devient une image plane lorsqu'il est développé. Cette image plane est souvent une image réelle obtenue en juxtaposant des photographies successivement prises après avoir fait pivoter un appareil photographique d'un angle équivalent à l'angle d'ouverture de son objectif. Mais cette image plane peut également être une image virtuelle. Seule une partie de la scène est visualisée sur l'écran, partie qui correspond à un secteur du cylindre, et l'observateur dispose de commandes de direction pour tourner à gauche ou à droite dans la scène.

Ce type de représentation apporte un progrès par rapport à une représentation plane, mais un quelconque objet de la scène est toujours vu sous le même angle. Pour visualiser plusieurs faces de cet objet, il convient de prévoir une séquence vidéo simulant une animation, par exemple une rotation autour de lui, l'objet apparaissant alors sous différents angles.

Cette séquence vidéo sera donc substituée à la partie du panorama qui apparaît sur l'écran. Or, la transition du panorama à la séquence vidéo doit s'effectuer en limitant autant que faire se peut les discontinuités telles que sauts d'images.

Le document Four Photographic VR technologies, publié le 7/12/1998, et le document Quick Time VR IEEE, publié le 6/8/1995 décrivent tous deux l'utilisation du logiciel Quick-Time VR, déjà cité plus tôt dans le préambule. Ces documents décrivent une technique de rotation d'un panorama, mais ne traitent pas les discontinuités qui apparaissent entre un fond d'écran et un objet en rotation.

Le document PICKER - EP 0 919 956 décrit l'utilisation d'un logiciel graphique pour endoscopie médicale. Il décrit qu'une source d'irradiation tourne autour d'un malade et visualise sur un écran des images tridimensionnelles d'un organe du patient. La visualisation de la cavité occupée par l'organe n'est pas incrustée dans une autre image. Il n'y a donc pas de nécessité de résoudre un problème de discontinuité entre les bords de l'organe et le fond de l'image.

Le document INTEL- WO 00/79797 décrit l'utilisation d'une caméra mobile pour prendre des vues sous plusieurs angles d'un même objet. Le domaine est celui des boutiques électronique où on peut voir l'objet que l'on veut acheter. On crée des flux vidéo en filmant un objet sous différents angles. Ces flux sont transmis par un réseau tel qu'Internet. Ce document ne décrit pas que l'on insère l'image de l'objet dans un panorama.

La présente invention vise ainsi une méthode qui permet de visualiser une séquence vidéo de présentation d'un objet qui figure dans un panorama en limitant la discontinuité apparaissant entre la visualisation du panorama et la visualisation de cette séquence.

L'invention concerne une méthode de visualisation d'un objet qui figure dans un panorama défilant sur un écran, telle que définie dans la revendication 1.

La commande d'activation produite par l'observateur permet donc de positionner la zone cible dans une fenêtre précisément définie de l'écran. L'opération produite par cette commande ne sera pas plus décrite car elle ne pose pas de difficulté à l'homme de l'art.

La séquence vidéo est ensuite visualisée dans la fenêtre, si bien que la discontinuité visuelle est limitée à cette fenêtre et ne concerne pas la totalité de l'écran.

Il convient par ailleurs de réduire les discontinuités au sein même de la fenêtre. Or, du fait de la visualisation en trois dimensions, la représentation de la zone cible, notamment de son contour, dépend de sa position sur l'écran.

Ainsi, la fenêtre figurant une représentation de référence de la zone cible suite à la commande d'activation, pour l'aspect visuel il est préférable que la séquence vidéo présente un contour identique à celui de cette représentation de référence.

De préférence, le panorama résultant d'un traitement optique présentant des caractéristiques prédéterminées, la séquence vidéo procède du même traitement optique et graphique.

Selon un mode de réalisation privilégié, la dernière vue de la séquence video est la représentation statique.

Fréquemment, la zone cible provient d'un réseau de diffusion.

L'invention vise également un appareil de visualisation d'un objet figurant dans un panorama tel que défini dans la revendication 6.

La présente invention apparaîtra maintenant avec plus de détails dans le cadre de la description qui suit d'exemples de réalisation donnés à titre illustratif en se référant aux figures annexées qui représentent :
- la figure 1, un panorama,
- la figure 2, une première vue de l'écran,
- la figure 3, une deuxième vue de cet écran, et
- la figure 4, un schéma d'un récepteur apte à la mise en oeuvre de l'invention.

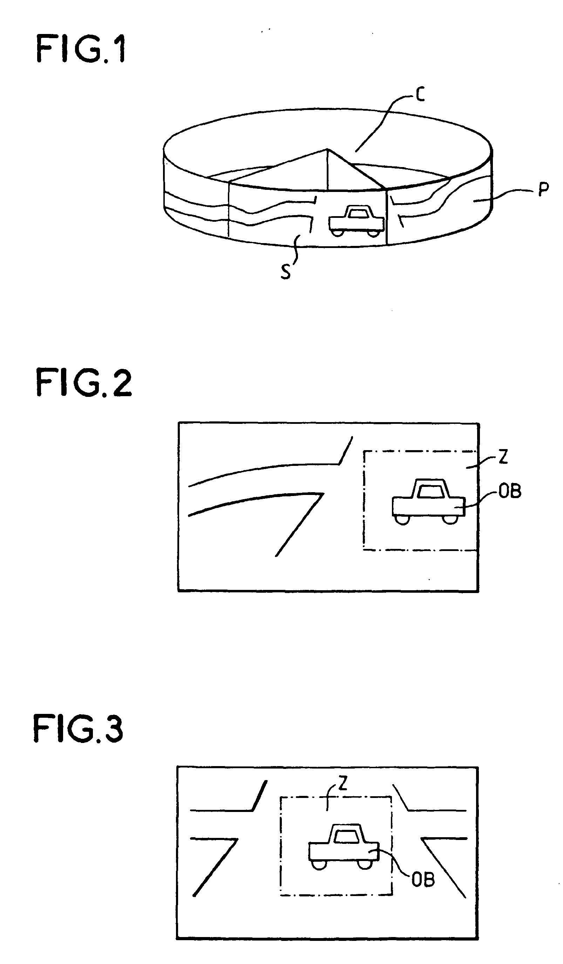

En référence à la figure 1, un panorama P représente une scène d'extérieur vue à 360° depuis un centre d'observation C. Le panorama apparaît comme un cylindre dont un secteur S (représenté en pointillé sur la figure) peut être visualisé sur un écran.

Il est connu de faire défiler le secteur visualisé S pour pouvoir observer la totalité du panorama P. Le défilement de ce secteur est accompagné d'une déformation de l'image qui donne la sensation à l'observateur de tourner au centre de la scène.

En référence à la figure 2, le secteur visualisé comprend un objet OB, à savoir une voiture, qui se distingue dans la scène panoramique. Cet objet s'inscrit dans une zone cible Z. Cette zone cible est, selon le présent exemple, un carré-qui est représenté en pointillé dans la figure 2. Le contour de la zone cible est donc ici une bordure qui s'étend depuis les quatre côtés du carré vers l'intérieur de celui-ci.

En référence à la figure 3, une commande d'activation permet de faire défiler le panorama pour amener la zone cible dans une fenêtre qui occupe une position prédéterminée dans l'écran, par exemple au centre de celui-ci. Les opérations déclenchées par cette commande d'activation ne seront pas plus détaillées car elles sont aisément accessibles à l'homme de l'art.

Dés lors, le panorama est immobilisé et le contenu de la fenêtre correspond à une représentation statique de l'objet OB ou de la zone cible Z qui peut être identique au contenu de la zone cible dans la figure 2.

Cette représentation statique est parfaitement déterminée car elle correspond à une zone identifiée du panorama.

Suite à l'opération de centrage de la zone cible Z, la méthode selon l'invention propose de substituer une séquence vidéo à la représentation statique dans la fenêtre.

Cette séquence vidéo peut être par exemple un film ou une séquence d'images de synthèse résultant d'un modèle en trois dimensions.

Cependant, pour éviter une discontinuité visuelle supplémentaire sur l'écran lorsque l'on visualise la séquence vidéo, la première image de cette séquence et de préférence les suivantes présentent un contour identique à celui de la représentation statique. De ce fait, la séquence semble visuellement s'inscrire parfaitement dans le panorama.

Il convient par ailleurs de souligner que le panorama a été réalisé selon une spécification optique déterminée. On pense en premier lieu à la distance focale ou à l'angle d'ouverture de l'objectif de prise de vues. Ainsi, il est préférable que la séquence vidéo réponde à cette même spécification pour minimiser encore les discontinuités qui pourraient apparaître lors de la visualisation.

Pratiquement, la séquence vidéo est souvent une présentation détaillée de l'objet OB vu sous différents angles. La première image de la séquence vidéo est ainsi identique à la représentation statique. De la sorte, il n'y a pas de sauts d'images sur l'écran. De plus, toujours dans le souci d'éviter une discontinuité visuelle lorsque la séquence vidéo se termine et que c'est à nouveau le panorama qui est présenté à l'observateur, la dernière image de cette séquence est avantageusement identique à la représentation statique.

La séquence vidéo pourrait être une présentation de l'objet dont la position angulaire est commandée interactivement par l'observateur. Ce dernier verrait donc un objet présenté au sein du panorama. Il faut noter que la présentation de l'objet doit comprendre un arrière-plan fixe en accord avec la représentation statique.

On remarquera par ailleurs que le panorama peut comporter plusieurs zones cibles incorporant chacune un objet distinct.

La méthode de l'invention est aisément mise en oeuvre dans un récepteur d'émissions audiovisuelles qui reçoit le panorama et la séquence vidéo d'un réseau de diffusion. Une variante consiste en ce que le panorama est résident dans le récepteur, ce panorama présentant par exemple l'intérieur d'un supermarché. Les séquences vidéo montrant par exemple des objets à vendre sont transmises par le réseau.

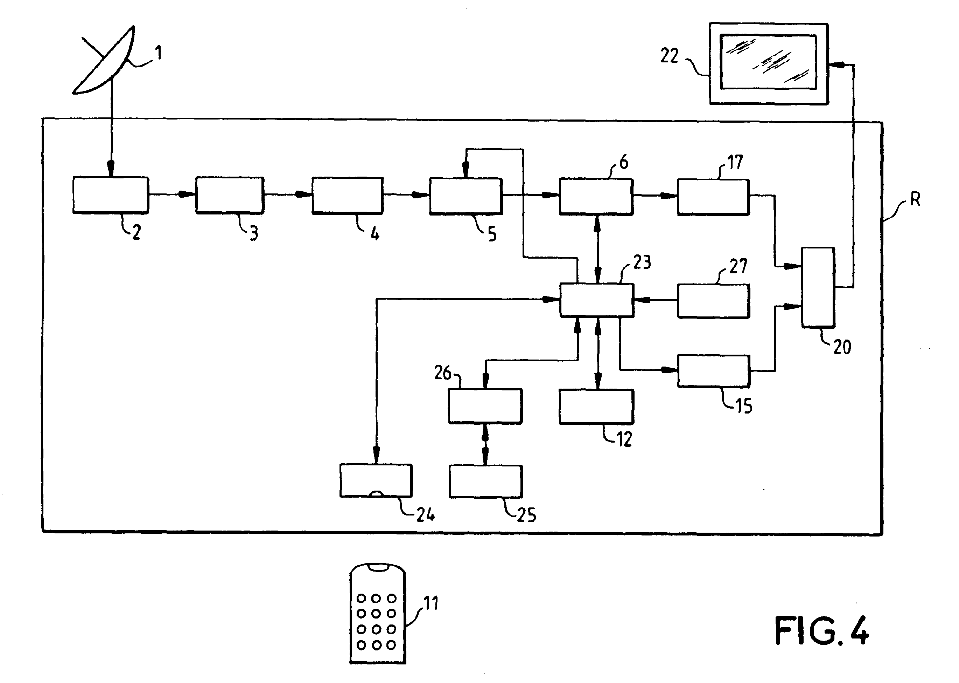

En référence à la figure 4, le récepteur (R) est par exemple un décodeur conforme aux spécifications DVB qui utilise une couche transport ISO/IEC 13818-1.

Une antenne 1 est reliée à un syntoniseur 2. Le signal fourni par le syntoniseur est démodulé par un démodulateur 3. Les données démodulées sont désentrelacées et corrigées par un circuit correcteur d'erreur 4 et transmises à un démultiplexeur 5. Celui-ci comporte un certain nombre de filtres programmés par un microprocesseur 23 en fonction des diverses applications supportées par le décodeur. Le microprocesseur 23 est connecté à une mémoire 12 comportant le système d'exploitation ainsi que les programmes résidents ou téléchargés de mise en oeuvre d'applications. Le microprocesseur est également connecté à un circuit d'horloge 27. Un générateur de caractères 15 permet la génération de menus de commandes ou de graphiques relatifs aux paramètres du décodeur ou à une application particulière. Le signal vidéo généré est multiplexé avec l'un des signaux vidéo en provenance d'un décodeur vidéo 17 vers une prise Péritel (prise SCART en anglais) reliée à l'écran de télévision 22. Le circuit de multiplexage 20 est géré par le microprocesseur 23. Pour la clarté du schéma, seules les connexions les plus importantes du microprocesseur 23 sont illustrées.

Les sections ou paquets audio ou vidéo filtrés par le démultiplexeur sont stockés dans des zones prédéfinies d'une mémoire tampon 6. Le décodeur peut également disposer d'un disque dur 25 relié au microprocesseur à l'aide d'une interface 26 permettant des transferts rapides d'informations. Le décodeur est aussi doté d'une télécommande infrarouge 11 reliée au microprocesseur par une autre interface 24.

Les exemples de réalisation de l'invention présentés ci-dessus ont été choisis pour leur caractère concret. Il ne serait cependant pas possible de répertorier de manière exhaustive tous les modes de réalisation que recouvre cette invention. En particulier, tout moyen décrit peut-être remplacé par un moyen équivalent sans sortir du cadre de la présente invention.

## Revendications

1. Méthode de visualisation d'un objet (OB) qui figure dans un panorama (P) défilant sur un écran, **caractérisée en ce qu'**elle comprend une étape de positionnement du panorama pour amener une zone cible prédéterminée (Z) du panorama entourant l'objet dans une fenêtre prédéterminée qui est disposée au centre de l'écran, et une étape de substitution de ladite zone cible prédéterminée (Z) du panorama par une séquence vidéo simulant une animation de l'objet, les étapes de positionnement et de substitution étant activées par une commande l'activation, ladite fenêtre figurant une représentation de référence de ladite zone cible (Z) suite à ladite commande d'activation, la première vue de ladite séquence vidéo étant identique à la représentation de référence, pour éviter les sauts d'images sur l'écran.

2. Méthode selon la revendication 1 **caractérisée en ce que**, ladite séquence vidéo présente un contour identique à celui de cette représentation de référence.

3. Méthode selon l'une quelconque des revendications 1 ou 2 **caractérisée en ce que**, le défilement de ladite séquence vidéo est commandé par l'utilisateur.

4. Méthode selon l'une quelconque des revendications précédentes, **caractérisée en ce que** la dernière vue de ladite séquence est identique à la représentation de référence.

5. Méthode selon l'une quelconque des revendications précédentes, **caractérisée en ce que** les données de ladite zone cible (Z) proviennent d'un réseau de diffusion.

6. Appareil de visualisation (R) d'un objet (OB) figurant dans un panorama (P) comportant une unité centrale (23), un moyen de génération de graphiques (15) destiné à être visualisés sur un écran de visualisation (22), **caractérisé en ce que** le moyen de génération de graphiques (15) positionne le panorama pour amener une zone cible prédéterminée (Z) du panorama entourant l'objet (OB) dans une fenêtre prédéterminée qui est disposée au centre de l'écran (22), et substitue ladite zone cible prédéterminée (Z) du panorama par une séquence vidéo simulant une animation de l'objet, le positionnement et la substitution par le moyen de génération de graphiques (15) étant activées par un moyen d'introduction de commande (11),
ladite fenêtre figurant une représentation de référence de ladite zone cible (2),
la première vue de ladite séquence vidéo étant identique à la représentation de référence pour éviter les sauts d'images
sur l'écran.

## Claims

1. Method for viewing an object (OB) appearing in a panorama (P) moving on a screen, **characterized in that** it includes a step for positioning the panorama to bring a predetermined target zone (Z) of the panorama surrounding the object in a predetermined window which is located at the center of the screen, and a step for replacing the said predetermined target zone (Z) of the panorama by a video sequence simulating an animation of the object, the positioning and replacement steps being activated by an activation control, said window featuring a reference representation of the said target zone (Z) following the said activation control, the first view of said video sequence being identical to the reference representation, in order to avoid images jumps on the screen.

2. Method according to Claim 1, **characterized in that**, said window featuring a reference representation of the said target zone (Z) following the said activation control, the said video sequence exhibits a contour identical to that of this reference representation.

3. Method according to either of Claims 1 and 2, **characterized in that** the moving of the said video sequence is controlled by the user.

4. Method according to any of the preceding claims, **characterized in that** the last view of the said sequence is identical to the reference representation.

5. Method according to any of the preceding claims, **characterized in that** the data of the said target zone (Z) comes from a broadcast network.

6. Apparatus for viewing (R) an object (OB) appearing in a panorama (P) comprising a central processing unit (23), means of generation of graphics (15) aimed at being viewed on a viewing screen (22), **characterized in that** the means of generation of graphics (15) position the panorama to bring a predetermined target zone (Z) surrounding the object (OB) in a predetermined window which is located at the center of the screen (22), and replaces the said predetermined target zone (Z) of the panorama by a video sequence simulating an animation of the object, the positioning and replacement by the means of generation of graphics (15) being activated by means of control input (11), said window featuring a reference representation of said target zone (Z), the first view of said video sequence being identical to the reference representation, in order to avoid images jumps on the screen

## Patentansprüche

1. Verfahren zur Anzeige eines Objekts (OB), das sich in einem Panorama (P) befindet, welches an einem Bildschirm scrollt, **dadurch gekennzeichnet, dass** das Verfahren einen Schritt der Positionierung des Panoramas, um einen vorgegebenen, das Objekt umgebenden Panoramazielbereich (Z) in ein vorgegebenes, in der Mitte des Bildschirms angeordnetes Fenster zu verschieben, und einen Schritt des Ersetzens des vorgegebenen Panoramazielbereichs (Z) durch eine eine Animation des Objekts simulierende Videosequenz umfasst, wobei die Schritte des Positionierens und des Ersetzens durch einen Aktivierungsbefehl aktiviert werden, wobei das Fenster eine Referenzdarstellung des Zielbereichs (Z) infolge des Aktivierungsbefehls darstellt, wobei das erste Bild der Videosequenz mit der Referenzdarstellung übereinstimmt, um an dem Bildschirm Bildsprünge zu vermeiden.

2. Verfahren nach Anspruch 1, **dadurch gekennzeichnet, dass** die Videosequenz eine Kontur aufweist, die mit derjenigen dieser Referenzdarstellung übereinstimmt.

3. Verfahren nach einem der Ansprüche 1 oder 2, **dadurch gekennzeichnet, dass** das Scrollen der Videosequenz durch den Benutzer gesteuert wird.

4. Verfahren nach einem der vorhergehenden Ansprüche,
**dadurch gekennzeichnet, dass** das letzte Bild der Sequenz mit der Referenzdarstellung übereinstimmt.

5. Verfahren nach einem der vorhergehenden Ansprüche,
**dadurch gekennzeichnet, dass** die Daten des Zielbereichs (Z) aus einem Ausstrahlungsnetz stammen.

6. Vorrichtung (R) zur Anzeige eines in einem Panorama (P) befindlichen Objekts (OB), mit einer Zentraleinheit (23), einem Mittel zum Erzeugen von Grafiken (15), die dazu bestimmt sind, an einem Anzeigebildschirm (22) angezeigt zu werden, **dadurch gekennzeichnet, dass** das Mittel zum Erzeugen von Grafiken (15) das Panorama positioniert, um einen vorgegebenen, das Objekt (OB) umgebenden Panoramazielbereich (Z) in ein vorgegebenes, in der Mitte des Bildschirms (22) angeordnetes Fenster zu verschieben, und den vorgegebenen Panoramazielbereich (Z) durch eine eine Animation des Objekts simulierende Videosequenz ersetzt, wobei das Positionieren und das Ersetzen durch das Mittel zum Erzeugen von Grafiken (15) durch ein Mittel zur Befehlseingabe (11) aktiviert werden, wobei das Fenster eine Referenzdarstellung des Zielbereichs (Z) darstellt, wobei das erste Bild der Videosequenz mit der Referenzdarstellung übereinstimmt, um an dem Bildschirm Bildsprünge zu vermeiden.
